# EUROPÄISCHE PATENTSCHRIFT

(11) **EP 0 968 964 B1**
(45) Veröffentlichungstag und Bekanntmachung des Hinweises auf die Patenterteilung: **11.09.2002**
(21) Anmeldenummer: 99111908.2
(22) Anmeldetag: 21.06.1999
(51) Int. Cl.: C02F 1/52, C02F 1/44, C02F 1/58

(54) **Verfahren zur stofflichen Verwertung von Gülle**
Process for use of liquid manure
Procédé de valorisation de lisier

(30) Priorität: 03.07.1998 DE 19829799
(43) Veröffentlichungstag der Anmeldung: 05.01.2000
(73) Patentinhaber: FRAUNHOFER-GESELLSCHAFT ZUR FÖRDERUNG DER ANGEWANDTEN FORSCHUNG E.V., 80636 München (DE)
(72) Erfinder: Hirth, Thomas, Dr., 77815 Brühl (DE); Schweppe, Rainer, 76228 Karlsruhe (DE); Höhn, Kai, 76744 Wörth (DE)

(56) Entgegenhaltungen:
- EP-A- 0 335 280
- EP-A- 0 363 612
- EP-A- 0 439 770
- EP-A- 0 915 058
- DE-A- 3 732 896
- DE-A- 3 833 039
- DE-U- 29 608 503
- PATENT ABSTRACTS OF JAPAN vol. 014, no. 350 (C-0744), 27. Juli 1990 (1990-07-27) & JP 02 127000 A (EBARA INFILCO CO LTD;OTHERS: 01), 15. Mai 1990 (1990-05-15)

## Beschreibung

Die Erfindung betrifft ein Verfahren zu stofflichen Verwertung ammoniumhaltiger Abwässer, insbesondere von Gülle.

Die in der landwirtschaftlichen Tierhaltung anfallende Gülle weist wegen ihres hohen Gehaltes an Stickstoff, Phosphor und Kalium ein beachtliches Nährstoffpotential auf und wird daher als Dünger eingesetzt. Die heute praktizierte direkte Ausbringung der Gülle auf landwirtschaftlichen Nutzflächen ist jedoch mit Gefahren für die Umwelt verbunden. So wird das klimaschädliche Gas Methan durch die Gülle freigesetzt. Durch Nitrifikation des Gülleinhaltsstoffes Ammoniak wird Nitrat gebildet, welches gewässerbelastend ist. Durch die in großem Maßstab betriebene Gülleausbringung kann es leicht zu einer Überdüngung kommen und der Nitratgehalt des Grundwessers die empfohlenen Grenzwerte überschreiten. Ammoniak gelangt in die Atmosphäre und wird mit dem Regen, beispielsweise über Waldgebieten, wieder zur Erde transportiert. Der damit verbundene Stickstoffeintrag stellt eine unerwünschte zusätzliche Düngung dar, die zu einer Überdüngung der Wälder beitragen kann.

Alternativ zur Entsorgung der Gülle durch ihre Ausbringung zur Düngung landwirtschaftlicher Nutzflächen wird heute eine umweltgerechte Aufbereitung der Gülle unter Wiedergewinnung der in ihr enthaltenen Wertstoffe angestrebt. Wertstoff ist in erster Linie auch das in der Gülle enthaltene Ammoniak. Dieses liegt, je nach pH-Wert, als physikalisch gelöstes Ammoniak oder in Form von Ammoniumionen vor. Die heute praktizierten Verfahren zur Entfernung von Ammonium aus ammoniumhaltigen Abwässern arbeiten mit der seit langem bekannten Fällung des Ammoniums als Magnesiumammoniumphosphat. Das erhaltene Fällsalz Magnesiumammoniumphosphat stellt einen Wertstoff dar. Dieses kann beispielsweise als Dünger eingesetzt werden oder zur Gewinnung von Ammoniak zu Ammoniak und Magnesiumhydrogenphosphat zersetzt werden.

In DE-A 37 32 896 ist ein Verfahren zur Eliminierung von Ammonium und Phosphat aus Abwasser offenbart, bei dem durch Zugabe von Magnesiumsalz und/oder Magnesiumoxid Ammonium und Phosphat als MgNH₄PO₄ · 6H₂O (Magnesiumammoniumphosphat) auskristallisiert und abgetrennt wird. Das Verfahren kann, gegebenenfalls nach vorheriger Feststoffabtrennung, zur Behandlung von kommunalen und industriellen Abwässern sowie von Spezialabwässern mit hohem Ammoniumgehalt, wie beispielsweise Gülle, eingesetzt werden.

In DE-A 40 40 067 ist ein Verfahren zur Gewinnung der Ammoniumgehalte aus Prozeß- und Abwässern unter Fällung von Magnesiumammoniumphosphat beschrieben, bei dem zur beschleunigten Fällung und Abscheidung von Magnesiumammoniumphosphat dem zu behandelnden Abwasser in einer Fällungsstufe gleichzeitig Magnesiumhydrogenphosphat und Natronlauge zugesetzt werden. Das abgeschiedene Magnesiumammoniumphosphat wird in einer Regenerierungsstufe thermisch in Ammoniak und Magnesiumhydrogenphosphat zerlegt, wobei das Fällmittel wieder gewonnen und in die Fällungsstufe zurückgeleitet wird.

In JP-A 2 127 000 ist ein Verfahren zur Reduzierung von in Abwasser enthaltenden Ammoniumionen beschrieben, bei dem nach einer Feststofabtrennung über ein Ultrafiltrationsmodul das Permeat mit Magnesiumionen behandelt wird und Ammoniumionen in Form von NH₄MgPO₄ ausgefällt werden.

Nachteilig an den bekannten Verfahren ist, daß wegen der vergleichsweise geringen Ammoniumkonzentrationen in den behandelten Abwässern bei der Fällung und anschließenden Abtrennung des Fällsalzes relativ große Flüssigkeitsströme bewegt werden müssen. Auch enthalten die gewonnenen ammoniumfreien Abwässer weitere unerwünschte lösliche Bestandteile, die zum Teil aus dem eingesetzten Fällmittel stammen. Zu deren Entfernung müssen wiederum große Flüssigkeitsmengen verarbeitet werden. Dies steht der Wirtschaftlichkeit dieser Verfahren, beispielsweise bei der Aufbereitung von Gülle in einer kontinuierlich arbeitenden Anlage, entgegen.

Aufgabe der Erfindung ist es, ein Verfahren zur umweltgerechten Aufbereitung und stofflichen Verwertung von Gülle, bei dem in der Gülle enthaltenes Ammonium durch Abtrennung in Form eines Fällsalzes als Wertstoff zurückgewonnen wird, bereitzustellen, bei dem die zu verarbeitende Flüssigkeitsmenge weitgehend reduziert ist und das dadurch besonders wirtschaftlich arbeitet.

Gelöst wird die Aufgabe durch ein Verfahren zur stofflichen Verwertung von ammoniumhaltigem Abwasser, welches weitere lösliche Bestandteile und gegebenenfalls Feststoffe enthält, mit den Schritten:
a) gegebenenfalls Abtrennung der Feststoffe;
b) Aufkonzentrierung des im wesentlichen feststofffreien ammoniumhaltigen Abwassers zu einem wässrigen Konzentrat, welches einen erhöhten Gehalt an Ammonium und weiteren löslichen Bestandteilen aufweist, unter gleichzeitiger Gewinnung von im wesentlichen ammoniumfreiem Reinwasser;
c) Fällung von Ammonium als Magnesiumammoniumphosphat in dem ammoniumhaltigen wässrigen Konzentrat;
d) Abtrennung von gefälltem Magnesiumammoniumphosphat unter Gewinnung von im wesentlichen ammoniumfreiem Restkonzentrat, welches zumindest teilweise die weiteren löslichen Bestandteile enthält.

Der Begriff Ammonium wird im folgenden als Oberbegriff für physikalisch gelöstes Ammoniak und Ammoniak in Form von Ammoniumionen verwendet, sofern nicht ausdrücklich zwischen beiden Spezies unterschieden wird. Ammoniumhaltige 5 Abwässer sind kommunale oder industrielle Abwässer sowie spezielle Abwässer, wie Deponiesickerwasser, Kokereiwasser, Gülle oder Jauche, die einen erhöhten Ammoniumgehalt aufweisen. Die genannten Abwässer weisen neben Ammonium vorzugsweise weitere lösliche Bestandteile auf, insbesondere solche, die gewässerbelastend sind. Beispiele für weitere lösliche Bestandteile sind Kationen, wie Na⁺, K⁺, Mg⁺, Ca⁺, Fe²⁺, Cu²⁺, Zn²⁺ und Anionen, wie Chlorid, Nitrit, Nitrat, Sulfat, Carbonat und Phosphat.

Die genannten Abwässer werden erfindungsgemäß vor der Durchführung der Fällung von Ammonium aufkonzentriert, wobei ein wässriges Konzentrat, welches einen erhöhten Gehalt an Ammonium und weiteren löslichen Bestandteilen aufweist, und ein gereinigtes, im wesentlichen ammoniumfreies Abwasser (Reinwasser), erhalten wird. Das im wesentlichen ammoniumfreie Reinwasser kann noch einen Ammonium-Restgehalt von < 250 mg/l, bevorzugt < 100 mg/l, besonders bevorzugt 50 < mg/l aufweisen. Das im wesentlichen ammoniumfreie Reinwasser kann darüber hinaus zumindest einen Teil der weiteren löslichen Bestandteile, vorzugsweise in deutlich verringertem Maße, aufweisen. Vorzugsweise ist der Gehalt an weiteren löslichen Bestandteilen so gering, daß das Reinwasser dem Vorfluter einer Kläranlage zugeführt werden kann.

Durch die Aufkonzentrierung des ammoniumhaltigen Abwassers kann die Fällung mit einer wesentlich verringerten Flüssigkeitsmenge durchgeführt werden. Ferner wird das Reinwasser bereits vor Durchführung der Fällung gewonnen. Dadurch wird eine zusätzliche Erhöhung des Salzgehaltes, welche durch die überstöchimetrische Zugabe von Fällungsmittel zu dem ammoniumhaltigen Abwassers im Fällungsschritt verursacht wird, vermieden.

Vorzugsweise wird die Aufkonzentrierung des ammoniumhaltigen Abwassers in einer Umkehrosmose durchgeführt. Der Aufkonzentrierungsfaktor beträgt dabei im allgemeinen zwischen 2 und 10, bevorzugt zwischen 3 und 8, besonders bevorzugt zwischen 5 und 7. Es können alle üblichen, in der Umkehrosmose verwendeten Membranmaterialien eingesetzt werden, die eine Porengröße aufweisen, bei der der Durchtritt von Ammoniumionen durch die Membran gegenüber Wassermolekülen erschwert ist. Im allgemeinen beträgt die mittlere Porengröße der Membran < 5 nm, bevorzugt < 2 nm. Geeignete Membranen sind beispielsweise Kunstoffmembranen aus Polyamid, Polysulfon und Polypropylen. Diese können beispielsweise als Wickel- oder als Plattenmodule eingesetzt werden. Die Druckdifferenz beträgt im allgemeinen 10 bis 200 bar, bevorzugt 20 bis 150 bar, besonders bevorzugt 30 bis 70 bar. Es können mehrere Umkehrosmoseschritte hintereinander, vorzugsweise zwei Umkehrosmoseschritte, durchgeführt werden.

Vor der Durchführung der Umkehrosmose wird gegebenenfalls eine Feststoffabtrennung durchgeführt. Diese ist bei stark feststoffhaltigen Abwässern, wie beispielsweise Gülle, notwendig. Die Feststoffabtrennung kann als konventionelle Filtration, Mikrofiltration, Ultrafiltration oder Nanofiltration durchgeführt werden. Vorzugsweise wird zur Feststoffabtrennung eine Ultrafiltration durchgeführt, wobei bevorzugt nach dem Querstrom-Prinzip gearbeitet wird. Es können alle üblichen Membrantypen, wie Keramikmembranen, Polymermembranen, Edelstahlmembranen oder Glasmembranen eingesetzt werden. Vorzugsweise werden wenig abrasive Keramikmembranen eingesetzt. Die Porengröße der eingesetzten Membranen beträgt im allgemeinen 5 bis 500 nm, bevorzugt 10 bis 100 nm. In einem besonders bevorzugten Ausführungsbeispiel wird eine Siliziumcarbid-Membran mit einer mittleren Porengröße von ca. 50 nm eingesetzt. Vorzugsweise werden grobe Feststoffpartikel (beispielsweise > 2mm) vor der Durchführung der Ultrafiltration, beispielsweise durch herkömmliches Sieben, in Kammerfilterpressen oder Siebbandpressen, abgetrennt.

Durch die Ultrafiltration werden neben Feststoffteilchen auch zum Beispiel Öltröpfchen, Bakterien, Viren oder größere organische Moleküle zurückgehalten. Dadurch wird der Anteil an weiteren gelösten Stoffen im ammoniumhaltigen Abwasser insgesamt verringert, wodurch sich bei der sich anschließenden Umkehrosmose höhere Aufkonzentrierungsfaktoren für Ammonium ergeben.

Aus dem bei der Umkehrosmose erhaltenen wäßrigen ammoniumhaltigen Konzentrat wird Ammonium als Magnesiumammoniumphosphat gefällt. Der Ammoniumgehalt des Konzentrats beträgt im allgemeinen 2 bis 70, bevorzugt 5 bis 50, besonders bevorzugt 10 bis 40, beispielsweise 10 g/l bei unfermentierter Gülle und 40 g/l bei fermentierter Gülle. Das ammoniumhaltige wäßrige Konzentrat kann die oben genannten weiteren löslichen Bestandteile enthalten. Bevorzugte weitere Bestandteile sind Na⁺, unter anderem K⁺, Mg⁺, Ca²⁺, die in folgenden Konzentrationen vorliegen können:
Na⁺: 100 bis 500 mg/l, bevorzugt 250 bis 300 mg/l
K⁺: 500 bis 1500 mg/l, bevorzugt 500 bis 1000 mg/l
Mg²⁺: 0 bis 100 mg/l, bevorzugt 5 bis 10 mg/l
Ca²⁺:10 bis 200 mg/l, bevorzugt 20 bis 100 mg/l
Cu²⁺:100 bis 600 mg/l, bevorzugt 200 bis 300 mg/l

Die Fällung wird durch Zugabe eines Fällmittels bewirkt. Geeignete Fällmittel sind beispielsweise, wie in DE-A 40 40 067 beschrieben, Magnesiumphosphatverbindungen, wie Magnesiumhydrogenphosphat, welches gemeinsam mit Natronlauge zugegeben wird, oder, wie in DE-A 37 32 896 beschrieben, Magnesiumsalz oder Magnesiumoxid/Magnesiumhydroxid, gegebenenfalls zusammen mit Phosphat oder Phosphorsäure. Vorzugsweise wird in dem erfindungsgemäßen Verfahren die Fällung durch Zugabe von Magnesiumoxid als Fällmittel in Gegenwart von Phosphat bewirkt. Magnesiumoxid kann als Feststoff oder als wäßrige Aufschlämmung, bevorzugt als wäßrige Aufschlämmung, zugegeben werden. Magnesiumoxid kann zusammen mit Magnesiumsalzen, beispielsweise Magnesiumchlorid, zugegeben werden. Es kann auch Magnesiumchlorid allein zugegeben werden. In diesem Fall besteht der Vorteil des erfindungsgemäßen Verfahrens unter anderem darin, daß durch die Fällung nach Durchführung der Umkehrosmose nicht mehr das ammoniumhaltige Abwasser, sondern nur noch das daraus gewonnene Konzentrat zusätzlich mit Chlorid belastet wird. Vorzugsweise wird jedoch mit Magnesiumoxid allein gearbeitet, da der Einsatz von gewässerbelastenden Salzen unter ökologischen Gesichtspunkten grundsätzlich unerwünscht ist. Die Aufsalzung durch überstöchiometrisches Magnesiumoxid betrifft hier nur das Konzentrat und beeinträchtigt nicht (durch Erhöhung des osmotischen Druckes) den Umkehrosmoseschritt.

Die Fällung wird in Gegenwart von Phosphat durchgeführt. Phosphat kann bereits in dem ammoniumhaltigen Abwasser enthalten sein oder nachträglich, beispielsweise in Form von Phosphorsäure, primärem Magnesiumphosphat (Mg(H₂PO₄)₂ · 3H₂O oder Phosphorpentoxid, zugegeben werden. Vorzugsweise ist zumindest ein Teil des Phosphats bereits in dem ammoniumhaltigen Abwasser enthalten, ein anderer Teil wird in Form von Phosphorsäure oder Phosphorpentoxid zugegeben. Durch Zugabe von Phosphat und Magnesiumoxid wird ein Molverhältnis Mg : N : P von im allgemeinen (0,7 bis 2) : 1 : (0,8 bis 1,2), bevorzugt (0,8 bis 1,2) 1 : (0,8 bis 1,2), besonders bevorzugt (0,9 bis 1,1) : 1 : (0,9 bis 1,1).

Der pH-Wert beträgt bei der Fällung im allgemeinen 8 bis 10, bevorzugt 8,2 bis 9,2, besonders bevorzugt ca. 9,0. Der pH-Wert kann bei alkalischen Abwässern, beispielsweise bei Gülle, durch Zugabe von Säure eingestellt werden. Bevorzugt wird dazu Phosphorsäure eingesetzt. In einer besonders bevorzugten Ausführungsform des erfindungsgemäßen Verfahrens wird bereits vor der Aufkonzentrierung durch Umkehrosmose ein neutraler bis schwach alkalischer pH eingestellt. Dies geschieht bei alkalischen Abwässern wie Gülle vorzugweise dadurch, daß ein Teil der für die Fällung benötigten Phosphorsäure bereits vor dem Umkehrosmoseschritt zugegeben wird. Dadurch liegt bei der Durchführung der Umkehrosmose Ammoniak überwiegend in Form von Ammoniumionen vor. Ammoniumionen weisen einen größeren effektiven Radius als physikalisch gelöste Ammoniakmoleküle auf und werden besser von der Membran zurückgehalten. Dadurch wird ein Permeat (Reinwasser) mit besonders geringem Gehalt an Ammoniak/Ammonium erhalten.

Das Magnesiumammoniumphosphat-Fällsalz kann durch übliche Verfahren zur Fest/Flüssig-Trennung, beispielsweise durch Filtration, abgetrennt werden. Vorzugsweise wird eine Trennung durch Sedimentation, beispielsweise in einem Absetzbehälter, herbeigeführt. Das abgetrennte Fällsalz kann als Retarddünger eingesetzt werden. Aus dem Fällsalz kann durch thermische Zersetzung, beispielsweise durch Dampfstrippen, Ammoniak gewonnen werden.

In einer weiteren bevorzugten Ausführungsform des erfindungsgemäßen Verfahrens wird die Fällung in zwei Stufen durchgeführt, wobei nach einer ersten Fällung nach Abtrennung des Fällsalzes durch nochmalige Zugabe von Magnesiumoxid und gegebenenfalls Phosphorsäure verbliebenes Ammonium nachgefällt wird.

Das nach Abtrennung des Fällsalzes erhaltene Restkonzentrat weist einen Ammoniumgehalt von bis zu 200, bevorzugt von 25 bis 125 mg/l auf.

Das Fällsalz besteht im allgemeinen zu mindestens 80 Gew.-%, bevorzugt zu mindestens 90 Gew.-% aus besonders bevorzugt zu mindestens 95 Gew.-% Magnesiumammoniumphosphat und kann die folgenden Nebenbestandteile aufweisen:
KMgPO₄: bis zu 10000 ppm, bevorzugt bis zu 100 ppm
Mg₃(PO₄)₂: bis zu 10000 ppm, bevorzugt bis zu 100 ppm
Ca₃(PO₄)₂: bis zu 10000 ppm, bevorzugt bis zu 100 ppm

Vorteilhaft ist, daß das aus der aufkonzentrierten Lösung gefällte Fällprodukt näher an der theoretischen Zusammensetzung ist als die nach dem Stand der Technik aus nicht aufkonzentrierten Lösungen gefällten Fällprodukte. So beträgt erfindungsgemäß beispielsweise die Abweichung im N-Gehalt nur bis zu ca. 7%, während sie in Verfahren nach dem Stand der Technik oft 15% und mehr beträgt.

Das erfindungsgemäße Verfahren kann kontinuierlich betrieben werden. Es eignet sich insbesondere für die kontinuierliche Aufbereitung von Gülle. In einer bevorzugten Ausführungsform weist die eingesetzte Gülle durch einen vorgeschalteten Biogas-Prozeß einen erhöhten Ammoniakgehalt auf. Dabei wird aus der aufzuarbeitenden Gülle zunächst in einem Biogas-Reaktor Methan gewonnen. Während des Biogas-Prozesses kommt es durch mikrobiellen Abbau der in der Gülle enthaltenen organischen Stickstoffverbindungen zur Bildung von Ammoniak, wodurch der Ammoniumgehalt bis auf das dreifache erhöht werden kann. Dadurch fällt ein besonders stark ammoniumhaltiges Abwasser an. Neben der umweltfreundlichen Gewinnung thermischer Energie aus Biomasse durch Verbrennung des gewonnenen Methans bietet dieses Verfahren den Vorteil, daß aus der angefallenen Gülle in sehr hoher Ausbeute Ammonium gewonnen wird.

Die Erfindung wird durch die nachstehenden Beispiele näher erläutert.

### Beispiel 1:

Stark ammoniumhaltige Gülle mit einem pH-Wert von 8,2, welche u. a. die folgenden gelösten Inhaltsstoffe in den angegebenen Konzentrationen aufwies: NH₄⁺/NH₃ 10 g/l, Na⁺ 280 mg/l, K⁺ 680 mg/l, Mg²⁺ 70 mg/l, Ca²⁺ 20 mg/l, Phosphat 250 mg/l, Chlorid 1050 mg/l, Nitrit 33 mg/l, wurde wie folgt aufbereitet:

In einem ersten Schritt wurden durch Siebung Feststoffe mit einer Partikelgröße > 2 mm abgetrennt und dann bei einem Druck von 2 bar unter Verwendung einer Keramikmembran eine Ultrafiltration durchgeführt. Dem erhaltenen Filtrat wurde ca. 85 %ige Phosphorsäure zugesetzt, bis sich ein pH-Wert von 7,5 einstellte, und das Filtrat bei 60 bar einer einfachen Umkehrosmose unterzogen, wobei eine Polyamidmembran mit einer mittleren Porengröße von 0,5 nm verwendet wurde. Es wurde ein wasserklares Permeat erhalten, welches u. a. 520 mg/l NH₄⁺ aufwies.

Zur Fällung von NH₄⁺ wurden zu 5 1 des Konzentrates in einem 10 1-Behälter eine Aufschlämmung von MgO in Wasser in leicht überstöchiometrischer Menge (ca. 3% bezogen auf Phosphat) als Fällungsmittel zugegeben und kräftig gerührt. Der pH-Wert betrug 7,0. Es wurde 15 min stehen gelassen, bis sich ein fast reinweißer Niederschlag von Magnesiumammoniumphosphat abgesetzt hatte. Es wurde ein im wesentlichen ammoniumfreies Konzentrat erhalten.

Der Niederschlag bestand zu > 98 Gew.-% aus Magnesiumammoniumphosphat-Hexahydrat.

### Beispiel 2:

Stark ammoniumhaltige Gülle mit einem pH-Wert von 8,2, welche u. a. die folgenden gelösten Inhaltsstoffe in den angegebenen Konzentrationen aufwies: NH₄⁺/NH₂ 10 g/l, Na⁺ 280 mg/l, K⁺ 680 mg/l, Mg²⁺ 70 mg/l, Ca²⁺ 20 mg/l, Phosphat 250 mg/l, Chlorid 1050 mg/l, Nitrit 33 mg/l, wurde wie folgt aufbereitet:

In einem ersten Schritt wurden durch Siebung Feststoffe mit einer Partikelgröße > 2 mm abgetrennt und dann bei einem Druck von 2 bar unter Verwendung einer Keramikmembran eine Ultrafiltration durchgeführt. Dem erhaltenen Filtrat wurde ca. 85 %ige Phosphorsäure zugesetzt, bis sich ein pH-Wert von 7,5 einstellte, und das Filtrat bei 60 bar einer zweifachen Umkehrosmose unterzogen, wobei eine Polyamidmembran mit einer mittleren Porengröße von 0,5 nm verwendet wurde. Es wurde ein wasserklares Permeat erhalten, welches u. a. Inhaltsstoffe entsprechend den angegebenen Werten aufwies: NH₄⁺ 15 mg/l Cl⁻ 45 mg/l, K⁺ 82 mg/l, Na⁺ 13 mg/l, Cu < 0,1 mg/l, Mg²⁺ < 0,2 mg/l, CSB (Chemischer Sauerstoffbedarf) 114 mg/l.

Das Konzentrat ist durch folgende Analysewerte gekennzeichnet: NH₄⁺-Gehalt 22000 mg/l, K⁺ 9000 mg/l, Na⁺ 1500 mg/l, Mg²⁺ 63mg/l, Cu²⁺ 6 mg/l, Leitfähigkeit 58 mS/cm, Trockensubstanzgehalt 64400 mg/l.

Zur Fällung von NH₄⁺ wurden zu 51 des Konzentrates in einem 10 1-Behälter eine Lösung von 163 g, MgCl₂ in 240 ml Phosphorsäure (28,3 Gew.-%) als Fällungsmittel zugegeben und kräftig gerührt. Der pH-Wert betrug 9,0. Es wurde 15 min stehen gelassen, bis sich ein fast reinweißer Niederschlag von Magnesiumammoniumphosphat abgesetzt hatte. Es wurde ein im wesentlichen ammoniumfreies Konzentrat mit einem NH₄⁺-Gehalt von ca. 100 mg/l erhalten.

Der Niederschlag bestand zu > 98 Gew.-% aus Magnesiumammoniumphosphat-Hexahydrat.

## Patentansprüche

1. Verfahren zur stofflichen Verwertung von ammoniumhaltigem Abwasser, welches weitere lösliche Bestandteile und gegebenenfalls Feststoffe enthält, mit den Schritten:
a) Abtrennung der Feststoffe durch Ultrafiltration, wobei die Porengröße der eingesetzten Membran 5 - 500 nm beträgt;
b) Aufkonzentrierung des im wesentlichen feststofffreien ammoniumhaltigen Abwassers durch Umkehrosmose zu einem wässrigen Konzentrat, welches einen erhöhten Gehalt an Ammonium und weiteren löslichen Bestandteilen aufweist, unter gleichzeitiger Gewinnung von im wesentlichen ammoniumfreiem Reinwasser;
c) Fällung von Ammonium als Magnesiumammoniumphosphat in dem ammoniumhaltigen wässrigen Konzentrat;
d) Abtrennung von gefälltem Magnesiumammoniumphosphat unter Gewinnung von im wesentlichen ammoniumfreiem Restkonzentrat, welches zumindest teilweise die weiteren löslichen Bestandteile enthält.

2. Verfahren nach Anspruch 1, **dadurch gekennzeichnet, daß** das ammoniumhaltige wässrige Konzentrat vor der Fällung einen Ammoniumgehalt von 5 bis 50 g/l aufweist.

3. Verfahren nach Anspruch 1 oder 2, **dadurch gekennzeichnet, daß** das ammoniumhaltige wässrige Konzentrat vor der Fällung folgende Gehalte weiterer löslicher Bestandteile aufweist:
Na⁺: 100 bis 500 mg/l
K⁺: 500 bis 1500 mg/l
Mg²⁺: 0 bis 100 mg/l
Ca²⁺: 10 bis 200 mg/l
Cu²⁺: 100 bis 600 mg/l

4. Verfahren nach einem der Ansprüche 1 bis 3, **dadurch gekennzeichnet, daß** die Fällung durch Zugabe von Magnesiumoxid in Gegenwart von Phosphat bei einem pH-Wert zwischen 8 und 10 bewirkt wird.

5. Verfahren nach Anspruch 4, **dadurch gekennzeichnet, daß** der pH-Wert durch Zugabe von Phosphorsäure eingestellt wird.

6. Verfahren nach Anspruch 5, **dadurch gekennzeichnet, daß** zumindest ein Teil der Phosphorsäure vor der Aufkonzentrierung zugegeben wird.

7. Verfahren nach einem der Ansprüche 4 bis 6, **dadurch gekennzeichnet, daß** die Fällung in mindestens zwei Stufen durchgeführt wird.

8. Verfahren nach einem der Ansprüche 1 bis 7, **dadurch gekennzeichnet, daß** als ammoniumhaltiges Abwasser Gülle eingesetzt wird.

9. Verfahren nach Anspruch 8, **dadurch gekennzeichnet, daß** die eingesetzte Gülle durch einen vorgeschalteten Biogas-Prozeß einen erhöhten Ammoniumgehalt aufweist.

## Claims

1. Method for material use of ammonium-containing effluent, which contains further soluble components and possibly solid materials, having the steps:
a) separation of the solid materials by ultrafiltration, the pore size of the membrane which is used being 5 - 500 nm;
b) concentration of the essentially solid material-free ammonium-containing effluent by reverse osmosis into an aqueous concentrate which has an increased content of ammonium and of further soluble components, with simultaneous obtainment of essentially ammonium-free pure water;
c) precipitation of ammonium as magnesium ammonium phosphate in the ammonium-containing aqueous concentrate;
d) separation of precipitated magnesium ammonium phosphate with obtainment of essentially ammonium-free residual concentrate which contains at least partially the further soluble components.

2. Method according to claim 1, **characterised in that** the ammonium-containing aqueous concentrate has an ammonium content of 5 to 50 g/l before precipitation.

3. Method according to claim 1 or 2, **characterised in that** the ammonium-containing aqueous concentrate has the following contents of further soluble components before precipitation:
Na⁺: 100 to 500 mg/l
K⁺: 500 to 1500 mg/l
Mg²⁺: 0 to 100 mg/l
Ca²⁺: 10 to 200 mg/l
Cu²⁺ 100 to 600 mg/l

4. Method according to one of the claims 1 to 3, **characterised in that** the precipitation is effected by addition of magnesium oxide in the presence of phosphate at a pH value between 8 and 10.

5. Method according to claim 4, **characterised in that** the pH value is set by addition of phosphorous acid.

6. Method according to claim 5, **characterised in that** at least a part of the phosphorous acid is added before the concentration.

7. Method according to one of the claims 4 to 6, **characterised in that** the precipitation is implemented in at least two stages.

8. Method according to one of the claims 1 to 7, **characterised in that** liquid manure is used as ammonium-containing effluent.

9. Method according to claim 8, **characterised in that** the liquid manure which is used has an increased ammonium content by means of an additional bio-gas process.

## Revendications

1. Procédé de valorisation en substances d'eaux usées contenant de l'ammonium qui renferment d'autres constituants solubles et éventuellement des matières solides, comportant les étapes :
a) séparation des matières solides par ultrafiltration dans laquelle la taille des pores de la membrane utilisée est de 5 à 500 nm,
b) concentration des eaux usées contenant de l'ammonium dépourvues essentiellement de matières solides, en un concentré aqueux qui possède une teneur accrue en ammonium et en d'autres constituants solubles, en récupérant en même temps l'eau pure essentiellement dépourvue d'ammonium,
c) précipitation de l'ammonium sous forme d'ammoniophosphate de magnésium dans le concentré aqueux contenant de l'ammonium,
d) séparation de l'ammoniophosphate de magnésium précipité en récupérant le concentré résiduel essentiellement dépourvu d'ammonium qui contient au moins partiellement les autres constituants solubles.

2. Procédé selon la revendication 1,
**caractérisé en ce que**
le concentré aqueux contenant de l'ammonium possède, avant la précipitation, une teneur en ammonium allant de 5 à 50 g/l.

3. Procédé selon l'une quelconque des revendications 1 ou 2,
**caractérisé en ce que**
le concentré aqueux contenant de l'ammonium possède avant la précipitation les teneurs suivantes en autres constituants solubles :
Na⁺ : de 100 à 500 mg/l
K⁺ : de 500 à 1500 mg/l
Mg²⁺ : de 0 à 100 mg/l
Ca²⁺ : de 10 à 200 mg/l
Cu²⁺ : de 100 à 600 mg/l

4. Procédé selon l'une quelconque des revendications 1 à 3,
**caractérisé en ce que**
la précipitation est occasionnée par addition d'oxyde de magnésium en présence de phosphate, à une valeur de pH comprise entre 8 et 10.

5. Procédé selon la revendication 4,
**caractérisé en ce qu'**
on ajuste la valeur du pH par addition d'acide phosphorique.

6. Procédé selon la revendication 5,
**caractérisé en ce qu'**
on ajoute au moins une partie de l'acide phosphorique avant la concentration.

7. Procédé selon l'une quelconque des revendications 4 à 6,
**caractérisé en ce qu'**
on effectue la précipitation en au moins deux étapes.

8. Procédé selon l'une quelconque des revendications 1 à 7,
**caractérisé en ce qu'**
on met en oeuvre comme eaux usées contenant de l'ammonium, du lisier.

9. Procédé selon la revendication 8,
**caractérisé en ce que**
le lisier mis en oeuvre possède une teneur accrue en ammonium grâce à un processus de biogaz (gaz de lisier) préconnecté.
